# EUROPEAN PATENT APPLICATION

(11) **EP 2 819 223 A1**
(43) Date of publication of application: **31.12.2014**
(21) Application number: 13751271.1
(22) Date of filing: 15.02.2013
(51) Int. Cl.: H01M 4/505, H01M 4/525

(54) **POSITIVE ELECTRODE ACTIVE MATERIAL**

(30) Priority: 23.02.2012 JP 2012037282
(71) Applicant: Nissan Motor Co., Ltd, Yokohama-shi, Kanagawa 221-0023 (JP)
(72) Inventor: ITO, Atsushi, Atsugi-shi Kanagawa 243-0123 (JP); OHSAWA, Yasuhiko, Atsugi-shi Kanagawa 243-0123 (JP)
(74) Representative: Hoefer & Partner
(86) International application number: PCT/JP2013/053714
(87) International publication number: WO 2013/125465

(57) **Abstract**

As a positive-electrode active material, there is used a solid solution type complex oxide represented by a compositional formula of [Li_{1.5}][Li_{{0.5{1-x}-ny}}□_{(n-1)y}M'_{ny}Mn₁₋ₓM_{1.5x}]O₃ (In the formula, 0.1≤x≤0.5 is satisfied, M is represented by NiαCoβMnγ, where 0<α<0.5, 0≤β≤0.33, and 0<γ≤0.5, M' is at least one element selected from the group consisting of Mg, Zn, Al, Fe, Ti and V, valence n is from 2 to 5, and 0 < ny < 0.5 is satisfied. □ represents a hole.).

## Description

### TECHNICAL FIELD

The present invention relates to a positive-electrode active material used for electrochemical devices, such as lithium-ion secondary batteries, lithium ion capacitors, etc.

### BACKGROUND ART

In recent years, there has been a demand for reducing the amount of CO₂ emission as countermeasures against air pollution and global warming. In car industry, there has been an expectation of reducing the amount of CO₂ emission by introducing hybrid electric vehicles (HEV) and electric vehicles (EV). As a power source for driving motors of these vehicles, the development of high-performance, secondary batteries has actively been conducted.

As such secondary batteries for driving motors, there is a request to be particularly high in capacity and superior in cycle characteristics. Therefore, of various secondary batteries, lithium-ion secondary batteries, which have high theoretical energies, attract attention.

In general, a lithium-ion secondary battery has a structure in which a positive electrode prepared by applying a positive-electrode active material, etc. on both surfaces of a positive electrode collector using a binder and a negative electrode similarly prepared by applying a negative-electrode active material, etc. on both surfaces of a negative electrode collector are connected with each other through an electrolyte layer, and they are stored in an battery casing.

In such lithium-ion secondary batteries, performances such as capacity characteristics, output characteristics, etc. greatly depend on the selection of active materials constituting the above-mentioned positive electrode and negative electrode.

Of these active materials, as a positive-electrode active material, there is known a battery using a lithium, transition metal, complex oxide containing nickel and manganese as transition metals.

For example, Patent Publication 1 proposes a nonaqueous electrolyte, secondary battery in which there is used as a positive-electrode active material a lithium, nickel and manganese complex oxide that has a hexagonal system, layered rock-salt structure belonging to a space group of R-3m and that is represented by Li[LixNiyMnz]O₂₋ₐ (in the formula, 0<x<0.4, 0.12<y<0.5, 0.3<z<0.62, 0≤a<0.5, x > (1-2y)/3, 1/4 ≤ y/z ≤ 1.0, and x+y+z = 1.0) containing Li in transition metal containing 3b site.

In the nonaqueous electrolyte, secondary battery described in the above Patent Publication 1, however, there has been a problem that the crystal structure is not stabilized, resulting in no obtainment of a high capacity, although the initial charge-discharge efficiency is improved by introducing the oxygen deficiency.

The present invention was made to solve the task in the prior art as mentioned above. Its object is to provide a positive-electrode active material used for electrochemical devices, as exemplified in lithium ion secondary batteries, which can reduce irreversible capacity while maintaining a high reversible capacity and is superior in the initial charge-discharge efficiency with a high capacity.

### PRIOR ART PUBLICATIONS

### PATENT PUBLICATIONS

Patent Publication 1: Japanese Patent Application Publication 2007-242581

### SUMMARY OF THE INVENTION

As a result of repeating an eager study to achieve the above object, the present inventors have found that the above object can be achieved by partly replacing lithium in a lithium manganese complex oxide with a metal different from lithium to introduce a defect, thereby achieving completion of the present invention.

That is, the present invention is one resulting from the above findings and is characterized by that a positive-electrode active material of the present invention is represented by a compositional formula of [Li_{1.5}] [Li_{{0.5{1-x}-ny}}□_{(n-1)y}M'_{ny}Mₙ₁₋ₓM_{1.5x}]O₃.

In the above compositional formula, 0.1≤x≤0.5 is satisfied, M is represented by NiaCoβMnγ, where 0<α<0.5, 0≤β≤0.33, and 0<γ≤0.5, M' is at least one element selected from the group consisting of Mg, Zn, Al, Fe, Ti and V, the valence n is from 2 to 5, and 0 < ny < 0.5 is satisfied. Furthermore, □ represents a hole.

An electrode of the present invention is characterized by being formed by using the above positive-electrode active material of the present invention. An electrochemical device of the present invention is characterized by that the above positive-electrode active material or electrode has been applied. As its specific example, it is possible to make a lithium-ion secondary battery.

According to the present invention, it is possible in electrochemical devices, as exemplified in lithium ion secondary batteries, to reduce irreversible capacity, while maintaining a high reversible capacity, by applying a complex oxide represented by the above compositional formula as a positive-electrode active material. This makes it possible to achieve a superior initial charge-discharge efficiency. In particular, it is possible to arbitrarily improve the initial charge-discharge efficiency and the discharge capacity retention percentage by selecting the above-mentioned different metal.

### BRIEF DESCRIPTION OF THE DRAWINGS

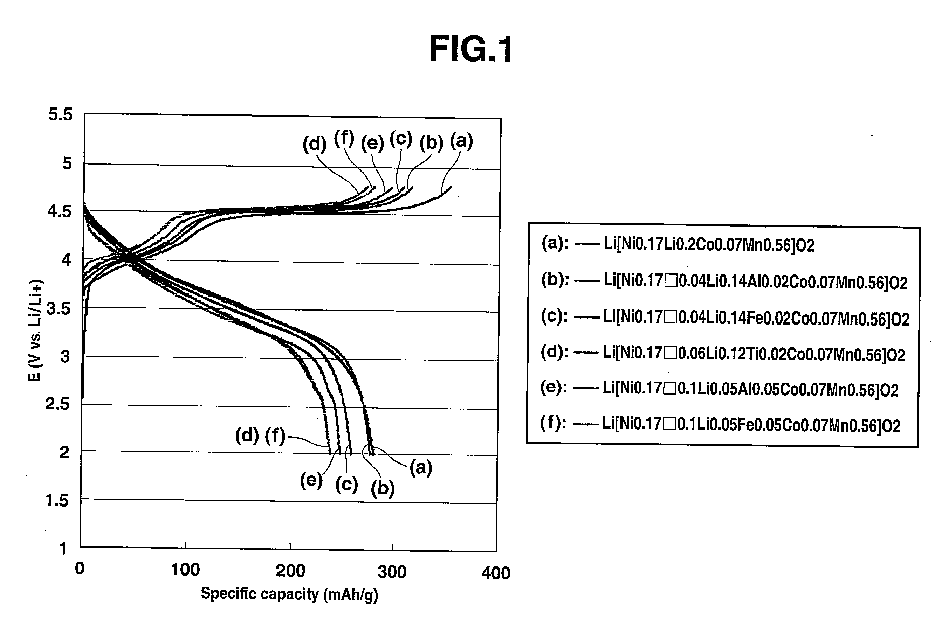

Fig. 1 is a graph showing charge-discharge curves of lithium ion secondary batteries prepared by using positive-electrode active materials obtained by Examples and Comparative Examples.

### MODE FOR CONDUCTING THE INVENTION

In the following, there are explained in detail en embodiment of a positive-electrode active material of the present invention and, as a representative example of electrochemical devices obtained by using this, a lithium ion secondary battery. In the present specification, "%" represents mass percentage unless particularly mentioned.

As an embodiment of a positive-electrode active material of the present invention, as mentioned above, it is possible to cite a solid solution series material, in which lithium in a lithium manganese complex oxide has partly been replaced with a metal that is different from lithium to introduce a defect, and which comprises a lithium transition metal complex oxide represented by a given compositional formula (1).

Compositional formula (1) is represented by:

[Li_{1.5}][Li_{{0.5{1-x}-ny}}□_{(n-1)y}M'_{ny}M_{y-x}M_{1.5x}]O₃ (1)

(In the formula, 0.1≤x≤0.5 is satisfied, M is represented by NiaCoβMnγ, where 0<α≤0.5, 0≤β≤0.33, and 0<γ≤0.5, M'is at least one element selected from the group consisting of Mg, Zn, Al, Fe, Ti and V, the valence n is from 2 to 5, and 0 < ny < 0.5 is satisfied. □ represents a hole.)

In case that there is no commercial product of such complex oxide, it is possible to use one synthesized, for example, by a solid phase method or a solution method (a mixed hydroxide method, a complex carbonate method, an organic acid salt method, etc.).

Of these synthesis methods, it is desirable to take a complex carbonate method, since yield is high and it is possible to obtain a homogeneous composition as it is an aqueous solution system, thereby making the compositional control easy. Besides these, it can also be prepared by a general synthesis method, such as coprecipitation method, sol-gel method, PVA method, etc.

In the compositional formula representing the above complex oxide, as mentioned above, it is necessary that x in the formula is from 0.1 to 0.5. Regarding this, if x exceeds 0.5, it is not possible to obtain a discharge capacity of 200 mAh/g or greater. Therefore, it becomes impossible to show a sufficient superiority in capacity over publicly-known layered positive-electrode active materials.

On the other hand, if x is less than 0.1, the composition becomes closer to Li₂MnO₃. With this, charge and discharge may become impossible.

Furthermore, M in the above compositional formula (1) is a nickel-cobalt-manganese series component represented by NiocCoβMnγ as mentioned above. It is necessary that α is greater than 0 and not greater than 0.5, that β is 0-0.33, and that γ is greater than 0 and not greater than 0.5. Furthermore, it is preferable that the value of α+β+γ is 1 from the viewpoint of stabilizing the crystal structure.

That is, in order that a positive-electrode active material comprising the above complex oxide may show a high capacity, it is necessary that Ni is in a divalent condition, since, when α is in the above range, Ni is under a divalent condition and subjected to a two electrons reaction (Ni²⁺ ←→ Ni⁴⁺).

Furthermore, in order that Ni may be in a divalent condition and subjected to a two electrons reaction even if a trivalent Co is added, it is necessary that β is in a range of 0-0.33. In order that Ni may similarly be in a divalent condition and subjected to a two electrons reaction when adding a tetravalent Mn, it is necessary that the value of γ is in a range of greater than 0 and not greater than 0.5. According to need, the above-mentioned Co is added for the purpose of improving purity of the material and improving electron conductivity.

As to the values of x, α, β, and γ in the compositional formula of the above-mentioned complex oxide, it is preferable that they respectively satisfy 0.1≤x≤0.25, 0<α≤0.457, 0≤β≤0.1, and 0<γ≤0.457.

As to M in compositional formula (1), it is possible to preferably apply a component represented by the following formula,

NiαCoβMnγM1σ

(in the formula, α, β, γ, and σ respectively satisfy 0<α<0.5, 0≤β≤0.33, 0<γ≤0.5, and 0≤σ≤0.1, and α+β+γ+σ = 1 is satisfied, and M1 is at least one selected from the group consisting of Al, Fe, Cu, Mg and Ti.).

In this case, the reasons to limit the values of α, β and γ are similar to the above, but it is preferable that σ satisfies 0≤σ≤0.1.

If σ exceeds 0.1, reversible capacity of the positive-electrode active material may become low. As M1, of the above-mentioned elements, Al and Ti are preferably usable.

In general, it is known that, from the viewpoint of improving purity of the material and improving electron conductivity, nickel (Ni), cobalt (Co) and manganese (Mn) contribute to capacity and output characteristics, and, from the viewpoint improving stability of the crystal structure, aluminum (Al), iron (Fe), copper (Cu), magnesium (Mg) and titanium (Ti) contribute thereto.

As to M' in the above-mentioned compositional formula (1), it is possible to use Mg, Zn, Al, Fe, Ti, V or an arbitrary combination of these. These metal elements have a property of being higher than Li in valence. Therefore, the selection of these results in introducing a defect.

Furthermore, it is necessary that the valence n is from 2 to 5 and that ny is greater than 0 and less than 0.5.

If the valence n is less than 2, it becomes impossible to introduce a defect. On the contrary, if it exceeds 5, there occurs a failure of generating impurities due to introducing too much amount of the defect. From the viewpoint of not forming impurities, it is preferable that the valence n is not greater than 4.

On the other hand, in case that the value of ny is not greater than 0, it becomes impossible to introduce the defect. If it becomes 0.5 or greater, there occurs an adverse effect of generating impurities. From the viewpoint of impurity formation, it is preferable to set "ny" at a value of not higher than 0.15.

The positive-electrode active material of the present invention is applied to electrochemical devices, such as lithium ion secondary batteries and lithium ion capacitors. In the following, as their typical example, a lithium ion secondary battery is explained with respect to its structure, materials, etc.

In general, a lithium ion secondary battery has a structure in which a positive electrode prepared by applying a positive-electrode active material, etc. on a positive electrode collector and a negative electrode prepared by applying a negative-electrode active material, etc. on a negative electrode collector are connected with each other through an electrolyte layer, and they are stored in an battery casing.

### [Positive electrode]

In lithium ion secondary batteries, the positive electrode is equipped with a structure in which a positive-electrode active material layer, that is, a positive-electrode active material layer containing the above-mentioned positive-electrode active material of the present invention and according to need a conductive assistant and a binder has been formed on one or both surfaces of a collector (a positive electrode collector) made of a conductive material such as aluminum foil, copper foil, nickel foil, stainless steel foil, or the like.

The thickness of the collector is not particularly limited, but in general it is preferably about 1-30 µm. Furthermore, the mixing proportion of these positive-electrode active material, the conductive assistant, and the binder in the positive-electrode active material layer is not particularly limited.

In the lithium ion secondary battery of the present invention, as long as a solid solution series positive-electrode active material of the present invention represented by the above-mentioned compositional formula (1), that is,

[Li_{1.6}][Li_{{0.5{1-x}-ny}}□_{(n-1)y}M'_{ny}Mₙ₁₋ₓM_{1.5x}]O₃ (1)

is contained as an essential component, it is not particularly problematic even if another positive-electrode active material is used besides this.

As such positive-electrode active material, it is possible to cite, for example, lithium transition metal complex oxides, lithium transition metal phosphoric acid compounds, lithium transition metal sulfuric acid compounds, ternary compound types, NiMn types, NiCo types, spinel Mn types, etc.

As the lithium transition metal complex oxides, it is possible to cite, for example, LiMn₂O₄, LiCoO₂, LiNiO₂, Li(Ni, Mn, Co)O₂, Li(Li, Ni, Mn, Co)O₂, LiFePO₄, those prepared by partly replacing these transition metals with other elements, etc.

As ternary compound types, it is possible to cite nickel cobalt manganese type (complex) positive electrode materials, etc. As the spinel Mn types, it is possible to cite LiMn₂O₄, etc. As NiMn types, it is possible to cite LiNi_{0.5}Mn_{1.5}O₄, etc. As NiCo types, it is possible to cite Li(NiCo)O₂, etc.

These positive-electrode active materials can also be used together in a plural number.

In case that these positive-electrode active materials have different optimum grain sizes to show their respective proper effects, it is not necessary to make all of the active materials uniform in grain size, but it suffices to use the optimum grain sizes by blending to show their respective proper effects.

The above-mentioned binder is added for the purpose of maintaining an electrode structure by binding active materials or an active material and a collector. As such binder, it is possible to use thermoplastic resins, such as polyvinylidene fluoride (PVDF), polytetrafluoroethylene (PTFE), polyvinyl acetate, polyimides (PI), polyamides (PA), polyvinylchloride (PVC), polymethyl acrylate (PMA), polymethyl methacrylate (PMMA), polyether nitrile (PEN), polyethylene (PE), polypropylene (PP) and polyacrylonitrile (PAN), thermosetting resins, such as epoxy resins, polyurethane resins and urea resins, and rubber type materials such as styrene-butadiene rubber (SBR).

The conductive assistant is also called a conductive agent and refers to a conductive additive to be mixed for the purpose of improving conductivity. The conductive assistant used in the present invention is not particularly limited. It is possible to use one publicly known hitherto. It is possible to cite, for example, carbon materials such as carbon black (e.g., acetylene black), graphite, carbon fibers, etc.

By containing the conductive assistant, an electron network in the interior of the active material layer is effectively formed. This contributes to the improvement of reliability due to the improvement of output characteristics of the battery and the improvement of storage stability of the electrolyte.

### [Negative electrode]

On the other hand, similar to the case of the positive electrode, the negative electrode is equipped with a structure in which a negative-electrode active material layer containing a negative-electrode active material and according to need a conductive assistant and a binder, which are similar to the case of the above-mentioned positive-electrode active material, has been formed on one or both surfaces of a collector (a negative electrode collector) made of a conductive material mentioned as above.

The negative-electrode active material applied to a lithium ion secondary battery of the present invention is not particularly limited, as long as it can reversibly occlude and release lithium. It is possible to use a negative-electrode active material publicly known hitherto.

It is possible to cite, for example, carbon materials such as graphite (e.g., natural graphite and artificial graphite) as a highly crystalline carbon, a low crystalline carbon (soft carbon and hard carbon), carbon black (e.g., ketjen black, acetylene black, channel black, lamp black, oil-furnace black, and thermal black), fullerene, carbon nanotube, carbon nanofiber, carbon nanohorn, and carbon fibril, elemental simple substances that form alloys with lithium, such as Si, Ge, Sn, Pb, Al, In, Zn, H, Ca, Sr, Ba, Ru, Rh, Ir, Pd, Pt, Ag, Au, Cd, Hg, Ga, Tl, C, N, Sb, Bi, O, S, Se, Te, and Cl, oxides (silicon monoxide (SiO), SiOx (0<x<2), tin dioxide (SnO₂), SnOx (0<x<2), SnSiO₃, etc.) and carbides (silicon carbide (SiC), etc.), etc., which contain these elements, metal materials such as lithium metal, lithium transition metal complex oxides such as lithium-titanium complex oxide (lithium titanate: Li₄Ti₅O₁₂). It is possible to use these negative-electrode active materials singly or in the form of a mixture of at least two.

In the above, it has been explained that the positive-electrode active material layer and the negative-electrode active material layer are each formed on one or both surfaces of their respective collectors. It is, however, also possible to form the positive-electrode active material layer on one surface of one collector and form the negative-electrode active material layer on the other surface. Such electrode is applied to a bipolar battery.

### [Electrolyte layer]

The electrolyte layer is a layer containing a nonaqueous electrolyte. The nonaqueous electrolyte contained in the electrolyte layer has a function as a carrier of lithium ions that move between the positive electrode and the negative electrode at the time of charge and discharge.

It is better that the thickness of the electrolyte layer is as thin as possible from the viewpoint of reducing the internal resistance. Normally, it is set at about 1-100 µm, preferably a range of 5-50 µm.

The nonaqueous electrolyte is not particularly limited, as long as it can show such function. It is possible to use a liquid electrolyte or a polymer electrolyte.

The liquid electrolyte has a form in which a lithium salt (electrolyte salt) is dissolved in an organic solvent. The organic solvent is exemplified by, for example, carbonates such as ethylene carbonate (EC), propylene carbonate (PC), butylene carbonate (BC), vinylene carbonate (VC), dimethyl carbonate (DMC), diethyl carbonate (DEC), ethyl methyl carbonate (EMC), and methyl propyl carbonate (MPC).

Furthermore, as the lithium salt, it is possible to use a compound that can be added to the active material layer of the electrode, such as Li(CF₃SO₂)₂N, Li(C₂F₅SO₂)₂N, LiPF₆, LiBF₄, LiAsF₆, LiTaF₆, LiClO₄, and LiCF₃SO₃.

On the other hand, the polymer electrolyte is classified into a gel polymer electrolyte (gel electrolyte) containing an electrolytic solution and a genuine polymer electrolyte containing no electrolytic solution.

The gel polymer electrolyte has a structure formed by injecting the above-mentioned liquid electrolyte into a matrix polymer (host polymer) formed of an ion conductive polymer. The electrolyte results in no fluidity by using the gel polymer electrolyte as an electrolyte. Therefore, it is superior in terms of easiness in blocking the ionic conductance between the layers.

The ionic conductive polymer used as a matrix polymer (host polymer) is not particularly limited. It is possible to cite, for example, polyethylene oxide (PEO), polypropylene oxide (PPO), polyvinylidene fluoride (PVDF), a copolymer of polyvinylidene fluoride and hexafluoropropylene (PVDF-HFP), polyethylene glycol (PEG), polyacrylonitrile (PAN), polymethylmethacrylate (PMMA), and copolymers of these, etc.

Herein, the above-mentioned ion conductive polymer may be the same as the ion conductive polymer used as the electrolyte in the active material layer or may be different from that. It is preferably the same as that. The type of the electrolytic solution (lithium salt and organic solvent) is not particularly limited. There are used electrolyte salts, such as lithium salts, and organic solvents, such as carbonates, which are exemplified in the above.

The genuine polymer electrolyte is one in which a lithium salt is dissolved in the matrix polymer and does not contain organic solvent. Therefore, it results in no risk of liquid leakage from the battery by using the genuine polymer electrolyte as the electrolyte. This improves credibility of the battery.

The matrix polymer of the gel polymer electrolyte or the genuine polymer electrolyte can exhibit a superior mechanical strength by forming a crosslinked structure. Such crosslinked structure may be formed by conducting a polymerization treatment, such as thermal polymerization, ultraviolet polymerization, radiation polymerization, and electron-beam polymerization, against a polymerizing polymer (for example, PEO and PPO) for forming a polymer electrolyte, using an appropriate polymerization initiator.

These nonaqueous electrolytes to be contained in the electrolyte layers may be used singly or in a mixture of at least two.

In case that the electrolyte layer is constituted of a liquid electrolyte or a gel polymer electrolyte, a separator is used for the electrolyte layer. As a specific form of the separator, it is possible to cite, for example, a microporous membrane made of a polyolefin, such as polyethylene and polypropylene.

### [Battery configuration]

A lithium ion secondary battery has a battery element (electrode structure) in which the above-mentioned positive electrode and negative electrode are connected with each other through the electrolyte layer. It has a structure in which such battery element is received in a battery casing, such as a can body and a laminated container (package).

The battery element is divided broadly into a winding-type battery having a structure prepared by winding a positive electrode, an electrolyte layer and a negative electrode, and a type of battery prepared by stacking a positive electrode, an electrolyte and a negative electrode. The above-mentioned bipolar battery has a stacked structure.

Furthermore, depending on the battery casing shape and structure, it may be referred to as a so-called coin cell, button battery, laminated battery, etc.

### EXAMPLES

In the following, the present invention is further explained in detail based on examples, but the present invention is not limited to these examples.

### [1] Synthesis of positive-electrode active material

A solid solution made of a lithium-containing complex oxide was synthesized as a positive-electrode active material by using a composite carbonate method.

Firstly, using sulfates of Ni, Co, Mn, Al, Fe and Ti, they were respectively weighed so that Ni, Co, Mn, Al, Fe and Ti have predetermined proportions by mol. They were stirred and mixed together in an aqueous solution of the sulfates. By adding 2M sodium carbonate dropwise, a precursor of a composite carbonate was allowed to proceed.

After drying this precursor, a mixing was conducted for the purpose of introducing a defect, while controlling the amount of lithium at the time of supply. The obtained mixture was subjected to a preliminary baking and then a baking in the air at 900 °C for 12 hours. With this, there were obtained the target positive-electrode active materials, that is, a Li-Ni-Co-Mn type complex oxide solid solution (Comparative Example 1) and solid solution materials (Examples 1-5) of five types of complex oxides in total in which defects were introduced by replacing a part of the complex oxides with Al, Fe and Ti.

The metal compositional proportion for each defect introduction is described in the following.

### <Comparative Example 1>

To obtain Li_{1.2}Ni_{0.17}Co_{0.07}Mn_{0.56}O₂, an adjustment and a mixing were conducted so that the proportions of Ni, Co and Mn by mol were respectively 0.2125, 0.0875 and 0.7 and that the molar ratio of Li to the metal composition M, that is, a combination of Ni, Co and Mn, became 1.5.

### < Example 1>

To obtain Li_{1.14}Ni_{0.17}Co_{0.07}Al_{0.02}Mn_{0.56}O₂, an adjustment and a mixing were conducted so that the proportions of Ni, Co and Mn by mol were respectively 0.2125, 0.0875 and 0.7, that the molar ratio of Li to the metal composition M, that is, a combination of Ni, Co and Mn, became 1.425, and that Al became 0.025 relative to the metal composition M.

### < Example 2>

To obtain Li_{1.14}Ni_{0.17}Co_{0.07}Fe_{0.02}Mn_{0.56}O₂, an adjustment and a mixing were conducted so that the proportions of Ni, Co and Mn by mol were respectively 0.2125, 0.0875 and 0.7, that the molar ratio of Li to the metal composition M, that is, a combination of Ni, Co and Mn, became 1.425, and that Fe became 0.025 relative to the metal composition M.

### < Example 3>

To obtain Li_{1.14}Ni_{0.17}Co_{0.07}Ti_{0.02}Mn_{0.56}O₂, an adjustment and a mixing were conducted so that the proportions of Ni, Co and Mn by mol were respectively 0.2125, 0.0875 and 0.7, that the molar ratio of Li to the metal composition M, that is, a combination of Ni, Co and Mn, became 1.4, and that Ti became 0.025 relative to the metal composition M.

### < Example 4>

To obtain Li₁.₀₅Ni₀.₁₇Co₀.₀₇Al₀.₀₅Mn_{0.56}O₂, an adjustment and a mixing were conducted so that the proportions of Ni, Co and Mn by mol were respectively 0.2125, 0.0875 and 0.7, that the molar ratio of Li to the metal composition M, that is, a combination of Ni, Co and Mn, became 1.3125, and that Al became 0.0625 relative to the metal composition M.

### < Example 5>

To obtain Li_{1.05}Ni_{0.17}CO_{0.07}Fe_{0.05}Mn_{0.56}O₂, an adjustment and a mixing were conducted so that the proportions of Ni, Co and Mn by mol were respectively 0.2125, 0.0875 and 0.7, that the molar ratio of Li to the metal composition M, that is, a combination of Ni, Co and Mn, became 1.3125, and that Fe became 0.0625 relative to the metal composition M.

### [2] Electrode preparation

Each positive-electrode active material obtained as above, acetylene black as a conductive assistant, and polyvinylidene fluoride (PVdF) as a binder were combined together to have a proportion of 85:10:5 by mass. To this, N-methylpyrrolidone (NMP) was added as a solvent for dilution, thereby preparing a positive-electrode slurry. This slurry was applied on an Al foil as a positive electrode collector so that the amount of the active material became about 10 mg per unit area, thereby obtaining a positive electrode having a diameter of 15 mm.

On the other hand, metal lithium was used as a negative-electrode active material.

### [3] Battery preparation

The positive electrode dried for 4 hours by a drying machine of 120 °C and the negative electrode made of metal lithium were opposed to each other with an interposal of two polypropylene porous membranes having a thickness of 20 µm, followed by stacking on the bottom of a coin cell. A gasket was mounted to maintain insulation between the positive electrode and the negative electrode. Then, an electrolyte solution was introduced by using a syringe.

A spring and a spacer were stacked, followed by putting thereon the top of the coin cell and then caulking, thereby preparing a lithium ion secondary battery.

As the electrolyte solution, there was used one prepared by dissolving LiPF₆ (lithium hexafluorophosphate) in a mixed nonaqueous solvent prepared by mixing ethylene carbonate (EC) with diethyl carbonate (DEC) at a volume ratio of 1:2, to have a concentration of 1 M.

### [3] Measurement of discharge capacity

Each battery obtained as above was connected to a charge-discharge device. As shown in Table 1, a charge and discharge was conducted at a constant electric current rate (1/12 C rate) by a constant electric current, charge and discharge method in which charge was conducted until the maximum voltage became 4.8 V and discharge was conducted until the minimum voltage of the battery became 2.0 V.

The results of this are shown in Table 2 together with the component compositions of the positive-electrode materials.

**[Table 1]**

| Condition | Voltage (V) | | Current rate (C) | Time (h) | Mode | Number of repetition |
|---|---|---|---|---|---|---|
| | Lower limit | Upper limit | | | | |
| Charge | | 4.8 | 1/12 | 12 | CC | 10 |
| Discharge | 2.0 | | | | | |

**[Table 2]**

| Division | Positive active material component composition | Capacity | | Initial efficiency (%) | Capacity retention (%) |
|---|---|---|---|---|---|
| | | Charge (mAh/g) | Discharge (mAh/g) | | |
| Com. Ex. 1 | Li_{1.5}[Ni_{0.255}Li_{0.3}Co_{0.105}Mn_{0.8}]O₃ | 352 | 281 | 79.8 | 75.8 |
| Example 1 | Li_{1.5}[Ni_{0.255}□_{0.06}Li_{0.21}Al_{0.03}Co_{0.105}Mn_{0.8}]O₃ | 315 | 277 | 87.9 | 88.5 |
| Example 2 | Li_{1.5}[Ni_{0.255}□_{0.06}Li_{0.21}Fe_{0.03}Co_{0.105}Mn_{0.8}]O₃ | 307 | 259 | 84.4 | 87.8 |
| Example 3 | Li_{1.5}[Ni_{0.255}□_{0.09}Li_{0.18}Ti_{0.03}Co_{0.105}Mn_{0.8}]O₃ | 276 | 238 | 86.2 | 85.9 |
| Example 4 | Li_{1.6}[Ni_{0.255}□_{0.15}Li_{0.075}Al_{0.075}Co_{0.105}Mn_{0.8}]O₃ | 295 | 248 | 84.1 | 85.9 |
| Example 5 | Li_{1.5}Ni_{0.255}□_{0.15}Li_{0.075}Fe_{0.075}Co_{0.105}Mn_{0.8}]O₃ | 279 | 238 | 85.3 | 81.1 |

| | | | | | |
|---|---|---|---|---|---|
| *Capacity retention refers to the data after 10 cycles. | | | | | |

Furthermore, charge and discharge curves by secondary batteries using respective positive-electrode active materials obtained by the above examples and comparative example are shown in Fig. 1.

As a result, it was confirmed that the battery using the positive-electrode active material of Example 1 prepared by replacing Li with 2 % (mass ratio) of Al retained a capacity comparable to that of Comparative Example 1 with no replacement.

Besides this, it was confirmed that the batteries by the positive-electrode active materials of Examples 2-5 also retained high capacities of not lower than 230 mAh/g.

On the other hand, with respect to the initial efficiency, as shown in Table 2, in contrast with that the battery by Comparative Example 1 was about 80 %, of Examples where the defect introduction had been conducted, that by Example 1 was the maximum of about 90 %, and Examples 2-5 also showed initial efficiencies of about 85 %. With this, the improvement of the initial efficiency by the defect introduction was confirmed. Furthermore, it was confirmed that the initial charge and discharge efficiency and the discharge capacity retention percentage can arbitrarily be improved by the selection of the above metal element for the replacement or the compositional proportion.

## Claims

1. A positive-electrode active material represented by a compositional formula of
[Li_{1.5}][Li_{{0.5{1-x}-ny}}□_{(n-1)y}M'_{ny}Mn₁₋ₓM_{1.5x}]O₃
(In the formula, 0.1≤x≤0.5 is satisfied, M is represented by NiaCoβMnγ, where 0<α<0.5, 0≤β≤0.33, and 0<γ≤0.5, M' is at least one element selected from the group consisting of Mg, Zn, Al, Fe, Ti and V, valence n is from 2 to 5, and 0 < ny < 0.5 is satisfied. □ represents a hole.).

2. The positive-electrode active material as claimed in claim 1, wherein M' has a valence of 4 or less, and ny is 0.15 or less.

3. An electrode wherein the positive-electrode active material as claimed in claim 1 or 2 has been applied.

4. An electrochemical device wherein the positive-electrode active material as claimed in claim 1 or 2 or the electrode as claimed in claim 3 has been applied.

5. The electrochemical device as claimed in claim 4, which is a lithium ion secondary battery.
